# DEMANDE DE BREVET EUROPEEN

(11) **EP 1 887 247 A1**
(43) Date de publication de la demande: **13.02.2008**
(21) Numéro de dépôt: 07114029.7
(22) Date de dépôt: 08.08.2007
(51) Int. Cl.: F16F 1/38

(54) **Articulation élastique et son procédé de fabrication**

(30) Priorité: 08.08.2006 ES 200602155
(71) Demandeur: Metalocaucho, S.l., 20130 Urnieta (Gipuzkoa) (ES)
(72) Inventeur: Zubillaga Briz, Mikel, 20002, SAN SEBASTIAN (ES); Iparraguirre Merino, Oscar, 20018, SAN SEBASTIAN (ES)
(74) Mandataire: Intes, Didier Gérard André

(57) **Abrégé**

Articulation élastique et son procédé de fabrication, constituée de deux monopièces en acier, un axe intérieur (1) et une douille extérieure (2), avec des filetages (1.2) et (2.1) réciproques, un élastomère en caoutchouc vulcanisé (3) correspondant étant positionné entre ces deux monopièces. Le procédé de fabrication de cette articulation part du façonnage de l'axe (1) et de la douille (2), avec cette dernière montée filetée sur ledit axe, afin de procéder ensuite à la vulcanisation par moulage par compression, transfert ou injection de l'élastomère (3).

## Description

### Domaine technique

L'objet de la présente invention est une articulation élastique, du type des articulations conçues pour être installées dans des applications dans lesquelles les efforts axiaux et radiaux sont élevés et les efforts de torsion sont faibles.

### État de la technique

Des applications pratiques de ce type d'articulations existent dans le secteur de l'automobile, des chemins de fer, dans les mécanismes de transmission du mouvement des hélices de bateaux ou d'avions, etc.

Le brevet des Etats-Unis n° US 2 962 311 décrit une articulation élastique présentant ces caractéristiques, applicable au domaine des chemins de fer. Cette articulation présentait la caractéristique d'être constituée d'un axe intérieur et d'une douille extérieure coaxiale à celui-ci, entre lesquels était incluse une masse élastomère, normalement en caoutchouc vulcanisé, avec la particularité que l'axe intérieur et la douille extérieure présentaient une configuration au profil ondulé de telle sorte que l'élastomère s'adaptait aux crêtes et aux creux des ondulations et que ceux-ci permettaient de supporter des efforts axiaux d'une plus grande amplitude.

Le brevet des Etats-Unis n° US 4 913 411 décrit une articulation élastique comme celle décrite précédemment, mais qui offrait les particularités suivantes : les ondulations pouvaient présenter un profil en trapèze de telle sorte que la dimension diamétrale minimale des ondulations de la douille extérieure était inférieure à la dimension diamétrale maximale des ondulations de l'axe intérieur.

Avec cette caractéristique, si on exerçait des efforts axiaux sur l'axe intérieur, celui-ci ne pourrait jamais se dégager de la douille extérieure puisque ses ondulations auraient une incidence sur celles de la douille extérieure. De plus, la rigidité radiale peut être contrôlée par la variation de l'épaisseur de la masse élastomère et la rigidité de torsion est réduite.

Or, pour pouvoir fabriquer la douille extérieure et l'axe intérieur avec cette caractéristique et afin que ce dernier puisse entrer dans la douille, il est décrit dans le brevet US 4 913 411 une réalisation pratique de l'articulation selon laquelle les ondulations de l'axe intérieur sont déterminées par des pièces rapportées, ce qui permet l'entrée préalable de l'axe intérieur dans la douille extérieure et le montage postérieur de ces pièces rapportées, pour vulcaniser finalement la masse élastomère.

Le brevet Européen n° EP 0 654 617 décrit une articulation de ce type destinée au secteur des chemins de fer et plus précisément pour assurer le montage entre une boîte d'essieu et un semi-châssis ou "boggie" de wagon d'un train de chemin de fer.

Dans ce brevet, pour pouvoir monter l'axe intérieur dans la douille extérieure, le procédé de fabrication suivant est décrit :
- Déterminer la douille extérieure par, au moins, deux moitiés enveloppantes ou coquilles qui sont montées sur l'axe intérieur avant la vulcanisation de la masse élastomère en caoutchouc.

Cette solution présente plusieurs problèmes qui sont résumés ci-dessous :
● Une plus grande complexité de fabrication de la douille extérieure du fait qu'elle est réalisée à l'aide d'au moins deux pièces par rapport à une réalisation en une seule pièce.
● Des usinages très précis pour que ces coquilles qui, à la manière de quartiers de fruit, composent la douille extérieure, soient parfaitement jointes entre elles, en fermant les bords de jonction afin que, lors de la vulcanisation de la masse élastomère, celle-ci ne coule pas entre les bords opposés de ces quartiers.
● La nécessité que les coquilles qui composent la douille extérieure soient fermement assemblées au moment de la vulcanisation de la masse élastomère, puisque cette masse élastomère tend à les séparer.
● Le fait que, quand l'articulation élastique est finalement installée sur son point de montage, la douille extérieure est entourée d'une enveloppe, qui peut faire partie de la structure du wagon elle-même sur laquelle la douille est installée ou bien d'une seconde douille, à la manière d'une chemise externe, qui évite que les coquilles composant la douille extérieure se séparent, pendant le travail continu de l'articulation.

En plus de cette réalisation de la douille extérieure à l'aide d'au moins deux demi-pièces ou coquilles, on connaît également un autre procédé de fabrication selon lequel la douille extérieure est conçue initialement avec une dimension diamétrale supérieure, d'une taille suffisante pour placer dans celle-ci l'axe intérieur et, cela étant effectué, la douille extérieure passe par une filière qui la comprime et l'amène jusqu'à la dimension diamétrale à laquelle l'axe intérieur ne peut plus se dégager axialement.

L'inconvénient de cette réalisation est qu'il est nécessaire d'avoir une compression très élevée de la douille extérieure, lors de son passage par la filière, pour pouvoir la rétrécir à la dimension nécessaire, ce qui requiert pour la réalisation de ladite douille extérieure des matériaux spéciaux ainsi qu'un processus supplémentaire impliquant une compression brutale dans la filière correspondante.

Les brevets des Etats-Unis n° US 2 231 037 et US 2 784 998 décrivent la réalisation d'articulations élastiques dans lesquelles l'axe intérieur présente un filetage hélicoïdal avec un filet mâle, tandis que la douille extérieure est constituée avec un filet femelle, les deux pièces s'accouplant en un montage fileté dans lequel il existe, entre les filetages, le jeu nécessaire pour la vulcanisation de la masse élastomère, de telle sorte que, avec cette réalisation, l'axe intérieur ne peut pas se dégager de la douille extérieure suite à un effort axial et, de plus, la réalisation et le montage de la douille extérieure sont simplifiés.

### Objet de l'invention

En partant de ces réalisations décrites dans les brevets US n° 2 231 037 et US 2 784 998, la présente invention préconise une articulation élastique qui a été conçue pour offrir les meilleures conditions face aux efforts axiaux et radiaux, avec la réalisation la plus simple.

Selon la présente invention, l'articulation élastique est uniquement constituée de deux pièces, la douille extérieure et l'axe intérieur, plus la masse élastomère en caoutchouc correspondante. Chacun de ces deux éléments présente en soi une réalisation monopièce de manière à ce que, pendant le procédé de vulcanisation du caoutchouc, il ne soit pas nécessaire d'entourer la douille extérieure avec des moyens enveloppants qui éviteraient qu'elle s'ouvre, comme dans le cas d'une conception avec au moins deux pièces, à la manière de coquilles.

Il n'est pas non plus nécessaire, dans le montage final de l'articulation élastique, d'entourer la douille extérieure avec la structure du wagon elle-même où elle sera installée ou avec une seconde douille externe, à la manière d'une chemise, puisque, ladite douille extérieure étant monopièce, elle ne peut pas s'ouvrir lorsqu'elle subit les efforts de travail, ce risque d'ouverture existant quand la douille extérieure est réalisée en deux pièces ou plus.

Par ailleurs et en ce qui concerne le procédé de fabrication de l'articulation élastique objet de la présente invention, le procédé démarre tout d'abord par le façonnage de l'axe intérieur et de la douille extérieure.

L'axe intérieur est un corps cylindrique métallique monopièce, concrètement en acier, façonné par usinage, moulage ou forgeage. Une fois ledit axe usiné, il est protégé au moyen d'un procédé de phosphatage.

La douille extérieure est également un corps métallique monopièce en acier, façonnée au moyen d'un procédé de moulage ou d'usinage, de manière à présenter à l'intérieur le filetage correspondant.

Cette douille extérieure est protégée par huilage.

Avec la douille extérieure et l'axe intérieur ainsi constitués, on procède à leur assemblage, en montant la douille extérieure sur l'axe intérieur et en positionnant les deux pièces dans le moule, de manière à introduire l'élastomère constitué d'une masse en caoutchouc liquide et à procéder à sa vulcanisation, en maintenant constante l'épaisseur de l'élastomère sur tout le contour.

Le processus de vulcanisation de l'élastomère peut être réalisé par moulage par compression, transfert ou injection.

L'incidence qu'il pourrait y avoir entre les crêtes du filetage de la douille extérieure et celles de l'axe intérieur empêche l'axe intérieur de se dégager de la douille extérieure lors d'un effort axial.

Pour obtenir la résistance appropriée aux efforts axiaux, le nombre de filets du filetage de l'axe intérieur doit être compris entre un minimum de deux filets et un maximum de sept filets ; le nombre de filets du filetage étant de préférence de quatre.

Les faces latérales de chaque filet du filetage définissent par rapport au plan moyen longitudinal dudit filet un angle "α" qui peut atteindre la valeur de 90°, 90° inclus.

Par ailleurs, et afin de supporter de manière appropriée les efforts radiaux, l'épaisseur de la masse élastomère en caoutchouc doit être comprise entre trois et vingt millimètres ; de préférence huit millimètres environ.

### Description des figures

La figure 1 est une vue en perspective de l'articulation élastique objet de la présente invention, dont il a été retiré la partie moyenne supérieure de la douille (2), afin de pouvoir observer l'intérieur de l'articulation.

La figure 2 est une vue de profil de l'articulation.

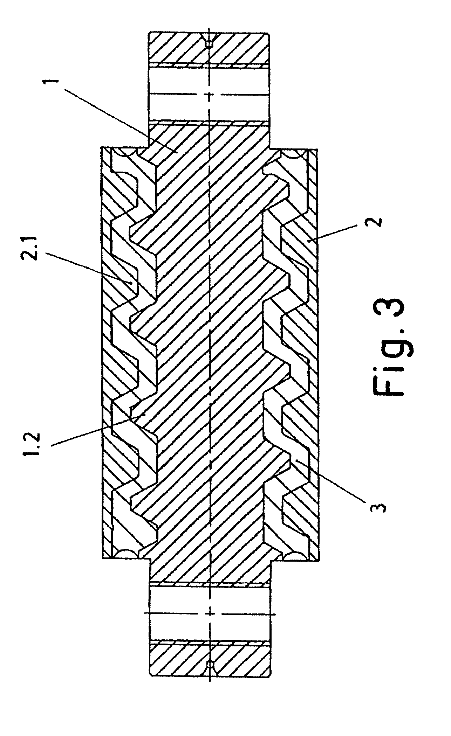

La figure 3 correspond à une vue en coupe longitudinale de l'articulation.

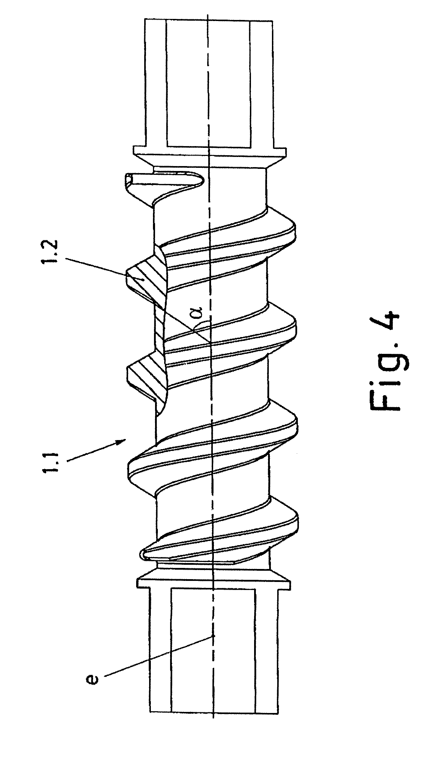

La figure 4 est une vue en élévation de l'axe intérieur (1), avec une section partielle de ses filets de filetage.

La figure 5 correspond à la vue en coupe longitudinale de la douille extérieure (2).

### Description détaillée de l'invention

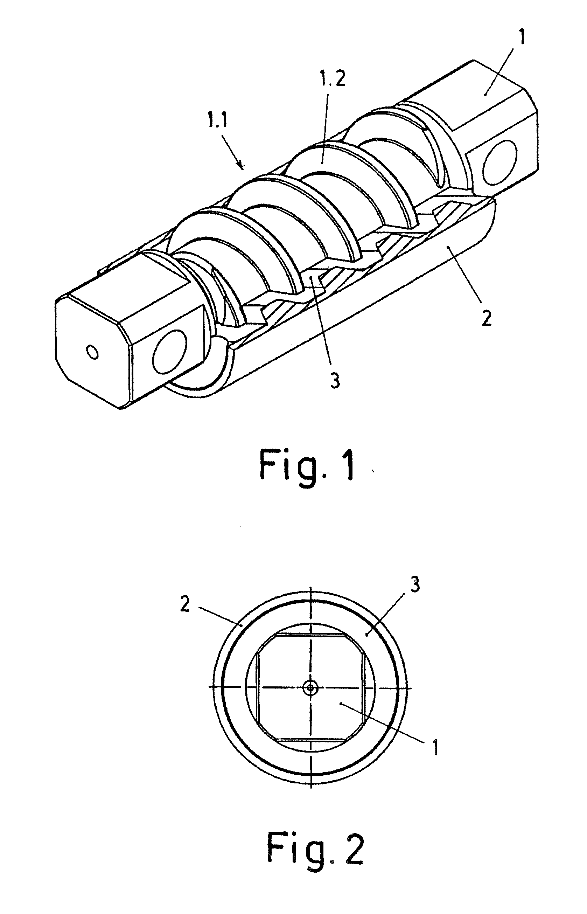

L'objet de la présente invention est une articulation élastique et son procédé de fabrication. L'articulation, telle qu'elle est représentée sur la figure 1, n'est constituée que de deux pièces (1 et 2) avec l'élastomère (3) vulcanisé correspondant entre elles.

La pièce (1) est un axe intérieur qui est constitué d'une monopièce en acier, avec une zone centrale (1.1) qui forme un filetage avec un minimum de deux filets (1.2) et un maximum de sept, de préférence quatre.

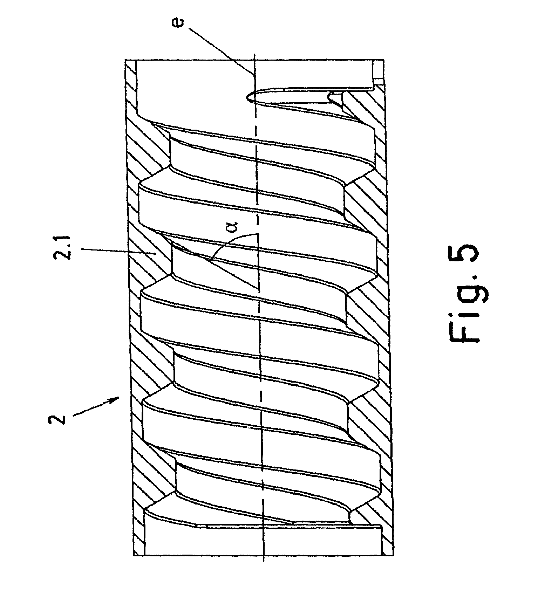

Chaque filet de filetage (1.2) est défini par des plans latéraux qui, par rapport à l'axe longitudinal "e" de l'articulation, définissent un angle "α" qui peut atteindre une valeur maximale incluse de quatre-vingt dix degrés. Dans la réalisation pratique non limitative représentée sur les figures ci-jointes, "α" correspond à 60°, comme cela est représenté sur la figure 5.

La pièce (2) est une douille extérieure qui est également constituée d'une monopièce en acier, avec un filetage intérieur dont les filets (2.2.) présentent une réciprocité en matière de nombre, dimensions et angle "α" avec les filets (1.2) de l'axe central (1).

Entre la douille extérieure (2) et l'axe intérieur (1), se trouve un élastomère (3) en caoutchouc vulcanisé, l'épaisseur dudit élastomère (3) étant constante sur tout le contour de l'articulation.

L'épaisseur de cet élastomère (3) est comprise entre 3 mm et 20 mm, avec de préférence une épaisseur de 8 mm environ.

### Le procédé de fabrication et de montage de l'articulation est le suivant :

L'axe intérieur (1) est une monopièce en acier qui, par usinage, moulage ou forgeage, est façonnée de manière à déterminer les filets de filetage (1.2).

La douille extérieure (2) est également une monopièce en acier qui est façonnée par usinage ou moulage de manière à déterminer les filets de filetage (2.1).

La douille extérieure (2) est montée filetée sur l'axe intérieur (1) et l'élastomère en caoutchouc (3) est vulcanisé.

Le procédé de fabrication de la vulcanisation peut être réalisé selon un moulage par compression, transfert ou injection.

## Revendications

1. Articulation élastique du type de celles constituées d'un axe intérieur (1), d'une douille extérieure (2) et d'un élastomère intermédiaire (3), **caractérisée en ce que** l'axe intérieur (1) et la douille extérieure (2) sont tous les deux des monopièces en acier qui forment, en réciprocité, des zones respectives dotées de filetages, de sorte que l'articulation est ainsi constituée uniquement de deux pièces (1 et 2) et de l'élastomère (3) correspondant, la douille extérieure (2) étant montée filetée sur l'axe intérieur (1), pour la vulcanisation finale de l'élastomère (3).

2. Articulation élastique, selon la revendication précédente, **caractérisée en ce que** les filets (1.2) et (2.1) de l'axe intérieur (1) et de la douille extérieure (2) sont formés selon un nombre maximum de sept filets et un minimum de deux filets, quatre filets étant le nombre préféré.

3. Articulation élastique, selon la première revendication, **caractérisée en ce que** l'élastomère en caoutchouc vulcanisé (3) présente une épaisseur constante sur tout le contour de l'articulation, avec une épaisseur comprise entre trois et vingt millimètres, cette épaisseur étant de préférence de huit millimètres environ.

4. Procédé de fabrication de l'articulation élastique, **caractérisé en ce que** l'axe intérieur (1) est constitué d'une monopièce en acier sur laquelle, par usinage, moulage ou forgeage, sont formés des filets de filetage (1.2), et **en ce que** la douille extérieure (2) est également constituée d'une monopièce en acier sur laquelle, par usinage ou moulage, sont formés des filets de filetage (2.1), le filetage de la douille extérieure (2) étant monté sur l'axe intérieur (1), pour procéder finalement à la vulcanisation de l'élastomère selon un moulage par compression, transfert ou injection.
